Europäisches Patentamt

European Patent Office

Office européen des brevets

(11) Publication number: **0 053 856**
**B1**

# EUROPEAN PATENT SPECIFICATION

(45) Date of publication of patent specification: **13.02.85**

(51) Int. Cl.⁴: **G 03 B 27/58**

(21) Application number: **81201314.2**

(22) Date of filing: **27.11.81**

(54) **Cassette for holding and dispensing a roll of web material.**

(30) Priority: **09.12.80 GB 8039456**
**23.06.81 GB 8119360**

(43) Date of publication of application:
**16.06.82 Bulletin 82/24**

(45) Publication of the grant of the patent:
**13.02.85 Bulletin 85/07**

(84) Designated Contracting States:
**BE DE FR GB**

(56) References cited:
**FR-A-2 309 898**
**US-A-1 479 960**
**US-A-2 935 190**

**RESEARCH DISCLOSURE, no. 163, November 1977, ref. no. 16352, HAVANT (GB), "Core locking device for web dispensing cassette", page 43**

(73) Proprietor: **AGFA-GEVAERT naamloze vennootschap**
**Septestraat 27**
**B-2510 Mortsel (BE)**

(72) Inventor: **Buelens, Edward**
**Duffelsesteenweg 178**
**B-2550 Kontich (BE)**
Inventor: **Goossens, Carolus Constantinus**
**Karmelietenstraat 109**
**B-2600 Berchem (BE)**
Inventor: **Muylle, Wilfried Edgard**
**Bredabaan 1279**
**B-2120 Schoten (BE)**

Courier Press, Leamington Spa, England.

## Description

The present invention relates to a cassette for holding and dispensing a roll of web material.

The invention is particularly suitable for embodiment in a cassette for holding and dispensing a roll of unexposed light-sensitive material for use in phototypesetting apparatus, in semi-automatic process cameras, for instance for handling diffusion transfer material in daylight environment, etc.

Cassettes for holding and dispensing a roll of light-sensitive material wound onto a tubelike core are known which are in the form of a box comprising a tubular sheel and two plastic molded parallel end walls having central hub portions for rotatably supporting said core within the box. The shell has a peripheral exit slot extending along its full length through which the material can be light-tightly withdrawn from a said roll. The cassettes are loaded by the manufacturer, the leading end of the roll extending through the exit slot, so that they are ready for use by the customer.

The conventional cassettes do not prevent unwinding of the roll of web material under the influence of vibrations, caused particularly during the transport of the cassettes. This unwinding is caused by the stiffness of the web material, in particular film comprising a polyester support. The diameter of the roll increases until the outer roll winding comes into contact with the inner face of the cassette shell. As a result, the film will rub against the inside of the shell as the film is drawn from the cassette. In the case that the shell has a four-sided form, it has been found that the unwinding may even go so far that the roll of web material takes a square rather than a circular form. In these circumstances the rubbing contact is greater.

If the material is wound with the light-sensitive layer directed towards the centre of the roll, said rubbing phenomenon has no or substantially no adverse effects because it is the rearside of the material which comes into rubbing contact with the shell. This situation is notably the case for photographic paper which, moreover has only a small unrolling tendency. Unfortunately, when conventional cassettes are loaded with photographic film, in particular film for use in phototypesetting apparatus, the light-sensitive layer of the film is liable to suffer damage because the film is usually wound with that layer facing outwardly.

From US—A—3 784 001 there are known microfilm cassettes provided with means for locking the film roll against undesired unwinding prior to the first use of the cassette. Said means consist of a locking member cooperating with the core and with a wall of the cassette and having a weakened section that may be ruptured by the torsion caused by the rotation of the core when the user starts drawing the film web from the cassette. Said known locking member requires a particular design of the cassette and of the film spool to ensure its proper engagement with said components.

It is the aim of the present invention to provide locking means that may be readily used in existing cassettes of the type described hereinbefore, without necessity for a redesign of said cassettes. The invention aims to provide also locking means that may be used in existing cassettes while requiring only a partial redesign of such cassettes. The invention is particularly intended for use in cassettes for webs having a width larger than 7.5 cm.

According to the present invention, this is accomplished by a device as characterized in claim 1.

The term "end portions" where used herein in relation to the locking member denotes the portions thereof which are on opposite sides of its weakened zone.

It is an advantage of a cassette in accordance with the invention that the cassette core does not have to be designed with special means for holding the locking member. Thus conventional plastic and paper board cores do not require to be modified in order that they can be temporarily locked as described. The engagement of the locking member with the hub portion of one end wall of the box can be of tongue and slot form, one end portion of the locking member forming a tongue which projects through a slot in said hub portion. The slot can be cut in the end wall of the hub (which may be the hub of a conventional cassette end cap) after moulding or otherwise forming such cap. Alternatively the end cap can be moulded with such slot. The light-tightness of a cassette of the described kind is not affected by the presence of such a slot, as will be explained later in this specification.

The weakened zone of the locking member may be formed by a suitable material that is more easily ruptured on application of torsional forces to the locking member than the material of the end portions of such member. But preferably said weakened zone is constituted by a cross-sectionally reduced zone of the locking member, the latter being a one-piece member of the same material throughout. A suitable material for the locking member is aluminium, or an aluminium alloy that may advantageously be shaped to the required form by stamping from a sheet of suchlike material.

According to a preferred embodiment of the invention, the rupture resistance of the locking member varies according to the width of the weakened zone (i.e. across its dimension running normally to the longitudinal axis of such member), there being within such width at least one inner sub-zone where the rupture resistance is negligible relative to the rupture existance in each of two sub-zones between which that inner sub-zone is located. In one such embodiment, there is at least one hole in the weakened zone of the locking member, the or each such hole creating a said inner sub-zone which is of nil rupture resistance. An alternative way of carrying out the invention is to form the locking member so that within the weakened zone there is at least one inner sub-zone where the material of the member is thinner than in the sub-zones between which it lies. This form of locking member could e.g. be formed as a one-piece plastics moulding.

It is preferred to provide a single said inner sub-zone of nil or relatively negligible shear resistance, such sub-zone being centrally located within the width of the weakened zone. However the invention includes embodiments wherein there are two or more such inner sub-zones located in line across the width of the locking member at the weakened zone.

Preferably the weakened zone is a zone which not only has at least one said inner sub-zone, but which is also of reduced width relative to both end portions of the locking member. In that case the width reduction and the said sub-zone(s) contribute to the weakening of the locking member.

Preferably the or each said inner sub-zone in the locking member has three or more boundary edges defining three or more corner angles. A said inner sub-zone with sharp boundary angles promotes ease of rupture. It is very suitable for the inner sub-zone to be of generally triangular or diamond shape. It is particularly advantageous for there to be a said sub-zone whose maximum across-zone dimension is between opposed boundary corners and for these corners to be located on a notional line normal to the longitudninal axis of the locking member.

When a locking member having a weakened zone with an inner sub-zone of nil or negligible shear resistance is ruptured by torsional force, the torque does not cause the member to become smoothly torn into two pieces. The shearing resistance changes abruptly during the twisting of the member. It has been found that the shearing gives rise to an audible sound or "click" which is useful because if signals to the user that the cassette roll is unlocked and that helps to ensure that no more material is pulled from the roll than is necessary for that purpose.

Advantageous optional features of a cassette in accordance with the invention are as follows. The frictional clamping of said one end portion of said locking member is such that the other end portion of the locking member is displaceable in a direction that is radial with respect to the axis of the core. In the mentioned way, the insertion of the other end portion of the locking member in a slot of the hub portion of one end wall during the assembling of the cassette is facilitated in the case of slight misalignment of the locking member in the core.

The said other end portion is a flat portion having two opposite side edge portions that run parallel to each other and parallel to the longitudinal axis of the member, and having a curved end edge portion, and said other end portion protrudes through a slot in the hub portion of the cassette, the slot wall being situated within the length of said parallel side edge portions. The mentioned curved end edge portion facilitates the engagement of the slot by said other end portion of the locking member upon assembling the cassette, and the parallel side walls allow for slight difference of the axial position of the locking member in the slot.

The invention is particularly suited for use in a cassette as claimed in GB P 1,546,068 relating to a light-tight cassette, and in EU Patent Publication 0,016,488 which also relates to a light-tight cassette, both patent rights being assigned to the same assignee as the present application. However, it will be understood that the invention is not limited to these particular cassettes, as will become apparent from the description hereinafter.

The invention will hereinafter be described by way of example with reference to the accompanying drawings wherein:

Fig. 1 is a perspective view of one embodiment of a cassette according to the invention;

Fig. 2 is a vertical section according to the plane indicated by the line 2—2 of fig. 1;

Fig. 3 is a vertical cross-section on line 3—3 of fig. 2, the locking member being removed;

Fig. 4 is an enlarged detail view of a section on line 4—4 of fig. 3, of the locked end portion of the core of the cassette;

Fig. 5 is an enlarged plan view of one embodiment of a locking member, and

Fig. 6 is a side view of this embodiment;

Fig. 7 is an enlarged plan view of a second embodiment of a locking member, and

Fig. 8 is a side view of this embodiment.

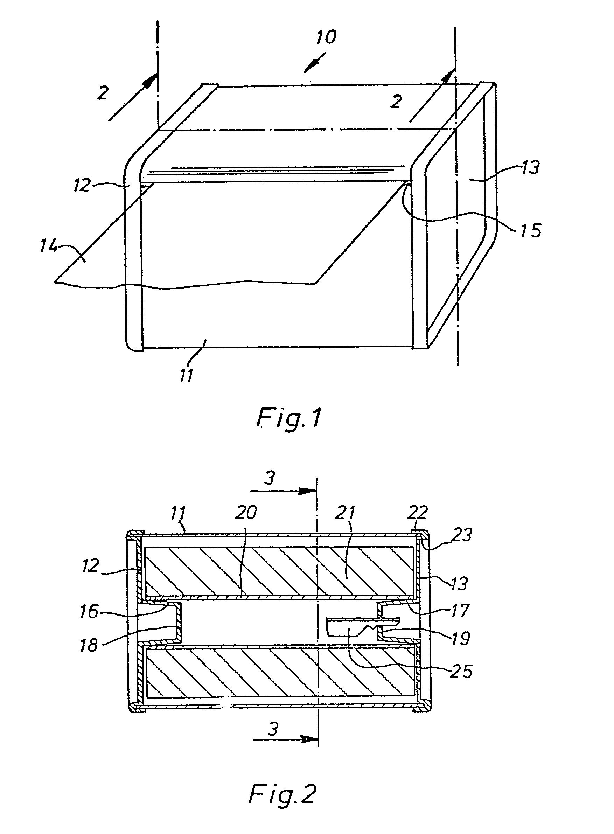

Referring to fig. 1, a rectanguloid cassette 10 for holding a roll of light-sensitive photographic material comprises a shell portion 11 and two end caps 12 and 13. A web 14 of photographic material may be drawn from the cassette through a light-tight exit slot 15 that extends between the end caps over the full length of the shell portion and that may be situated close to a corner portion of the shell. The photographic material has been illustrated as being transparent in the figure. The shell portion of the cassette may be manufactured from plastic or paperboard whereas the end caps may preferably be made from plastic by injection-molding or by thermo-vacuum forming.

Fig. 2 illustrates a vertical longitudinal cross-section of the cassette on line 2—2 of fig. 1. The end caps have central hub portions 16, 17 that may be formed by central portions upset from the wall of the caps terminating in circular walls 18 and 19. The hub portions have a slight conical form and they rotatably support a hollow core 20 onto which a roll 21 of the light-sensitive web 14 is wound. The core is a tubular body that is suitably made from paperboard or plastic.

The end caps 12 and 13 may have inner and outer peripheral wall portions, such as the portions 22 and 23 illustrated for the cap 13, defining a peripheral groove for receiving an end of the shell 11. The fixing of the end caps to the shell may occur by glueing, by taping, or even by stitching as disclosed in EU Publication 0,016,488 mentioned hereinbefore. The end caps may further be provided with radial ribs for increasing the rigidity of the caps, and with corner guide portions with sloping flanks for facilitating the assembling of the shell and the end caps, all as known in the art.

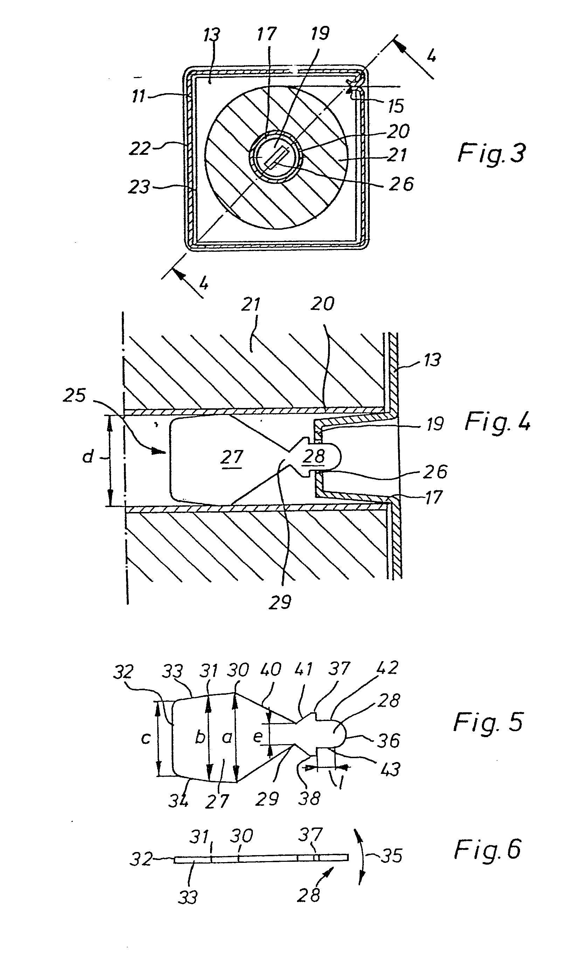

The locking member for locking the core 20 against undesired rotation in the cassette is the member 25 that extends from the core 20 into a slot in the circular wall 19 of the hub portion 17. The form of the locking member 25 is difficult to recognize in fig. 2, since the member has been cut half away by the section according to the plane 2—2 of fig. 1 and, moreover it is situated in a plane that is at an angle of 45° with respect to the faces of the shell 11. The form and the operation of the locking member are better understood by the illustration of fig. 4 which is a partially enlarged sectional view of line 4—4 of fig. 3 where also the slot 26 in the hub portion 17 is clearly visible.

Referring to fig. 4, the locking member 25 is a flat piece of material having a first end portion 27 that is clamped by the core 20, and a second end portion 28 that engages in the slot 26. Those end portions are interconnected by a zone 29 of reduced width. Details of said locking member are as follows, with reference to figs. 5 and 6. The end portion 27 has a greatest width $a$ at a position 30, a slightly less width $b$ at a position 31, and a still less width $c$ at the rear edge 32, whereby said end portion has in fact slightly convexly curved side edges. The width $a$ slightly exceeds the inner diameter $d$ of the core 20, and the width $b$ is slightly smaller than said diameter $d$. The purpose of said difference in widths is as follows. The width $a$ is such as to ensure the frictional clamping of the member 25 by the core 20 to such an extent that rotation of said member in the core under the influence of forces applied to the end portion 28 is impossible. Said clamping is, however, not so tight as to prevent the locking member from being axially displaced along the core, as is required when the locking member is inserted into is illustrated position. The insertion of the member may occur in a simple way by means of a slotted cylindrical tool, not illustrated, wherein the end portion 28 of the member is temporarily clamped, and by means of which the member 25 is slid into the core 20 preparatory to the assembling of the cassette. At this stage, the roll 21 is preferably already wound on the core. A collar or the like on the tool may determine the depth of insertion of the tool in the core so that a reproducible position of the member 25 in the axial direction of the core is attained.

A further consideration in connection with the dimension $a$ is that the clamping force should not be such as to cause any significant deformation of the tubular core. Such deformation might cause pressure-sensitizing of light-sensitive material on the core, and it might also impede the smooth rotation of the core on the cassette hub portions. The mutual inclination of the lateral side edges 33 and 34 of the locking member between the positions 31 and 32 facilitate introduction of the locking member into the core. The inclination of said side edges between the positions 31 and 30 is less than between 31 and 32, and suffices to localize the gripping zone between the positions 31 and 30. Thus, although the side edges are between 31 and 30 in contact with the inner wall of the core, the point of maximum pressure is located at the position 30, so that the member is capable of undergoing a pivotal or tilting movement about an axis that coincides approximately with the dimension $a$, which results in a displacement of the end portion 28 of the member in the sense indicated by arrow 35 illustrated in fig. 6. This freedom for pivotal movement facilitates the engagement of the end portion 28 in the slot 26 of the end cap 13, upon the assembling of the cassette. Any possible small misalignment of the member in a direction parallel with the longer side of the slot is self-correcting because the rounded edge 36 has a limited centering effect on the member when assembling the cassette.

The length $l$ of the parallel side walls 42, 43 of the end portion 28 of the member 25 is such as to allow slight tolerances in the engagement of the end portion 28 with the slot 26, in the axial direction of the cassette.

The purpose of the shoulder portions 37 and 38 is to prevent the end portion 28 from falling out of the cassette through the slot 26 following rupturing at the zone 29, and thereby possibly damaging the mechanism of the exposure apparatus, such as a phototypesetter, wherein the cassette is used.

The strength of the weakened zone 29 must be such that the locking member is not ruptured by forces exerted by the roll 21 during transport, handling, etc., of the cassette, but yet may be readily shorn by the twisting force imposed on the initial withdrawal of web from the cassette by the operator. The force that is required for the unlocking of the roll will be greater than the frictional resistance to rotation of the roll on the hub portions 16 and 17, but should preferably be smaller than the pulling force which would be necessary for causing a constricting of the roll windings.

A further condition for the satisfactory operation of the locking system according to the invention, is that the friction of the roll 21 on the core 20 is sufficient to produce the couple that is required to shear the locking member. If the winding characteristics of the roll on the core are such that reliance cannot be placed on the frictional engagement of the core by the innermost convolution, then the trailing end of the roll should be fixed to the core for instance by the use of adhesive or by spot-welding of a thermoplastic layer on the core.

The purpose of the location of the slot 26 at an angle of 45°, as illustrated in fig. 3, is to avoid that the end portion 28 would ever exert an excessive pressure on an end of the rectangular opening 26. Suchlike situation might happen if the member 25 had been misaligned in the core whereby the end portion 28, considered according to the position of fig. 4, would be located lower than the illustrated position, so that it could strongly bear on an end of the slot in the case of a vertically oriented slot. The described disposition of the slot at 45° avoids a vertical orientation of the slot at all stacking positions wherein two side walls of the shell are horizontal and the two other side walls are vertical.

The following data relate to an example of a cassette with a locking member according to the invention.

Core 20:

| | |
|---|---|
| paperboard with a wall thickness of | 2 mm |
| inner diameter | 28.6 mm |
| length | 75 mm |

Roll 21:

light-sensitive photographic film for phototypesetting,

light-sensitive layer wound at outside of roll

| | |
|---|---|
| length of the roll | 30.5 m |
| width of the roll | 77 mm |

Locking member 25: shape as illustrated in figs. 5 and 6.
Made by stamping from a sheet of aluminium with a thickness of 1.2 mm.

Dimension $a$:29.8$\pm$0.1 mm

Dimension $b$:29.4$\pm$0.1 mm

Dimension $c$:5.0$\pm$0.1 mm

Slot 26　　: length:13.0$\pm$0.2 mm
　　　　　　　width:2.0+0.0—0.2 mm

The normal force for drawing the film from the cassette varied between 400 g and 675 g. The initial drawing force for shearing the locking member amounted to approximately 3000 g.

The shearing of the locking member starts with a torsional deformation of the weakened neck portion 29 over approximately 90 degrees.

Upon further rotation of the core, the neck 29 is broken off. This shearing of the locking member occurs very smoothly. The portion 28 may remain in the slot 26, but usually it will fall out of said slot to rest on the inner wall of the core.

It has been found that the shaping of the locking member with edge portions tapering towards the neck portion 29 (see Fig. 5) facilitates dislodgement of the portion 28 from the slot 26 after the rupture of the neck portion. It has been found that a locking member wherein the angle between its edges terminating at the neck portion 29, and the corresponding wall section of the core, was much greater than that illustrated in fig. 4, for instance a locking member wherein the neck portion was formed by two opposite radial indentations in a rectangular plate thereby to reduce the cross-section of the member, did not always operate satisfactorily, because after rupture of the neck portion, the portion 28 became jammed by the shoulders of the end portion 27 before the end portion 28 had dropped completely out of the slot 26.

The light-tightness of the cassette is not impaired by the slot 26. Light that enters through the opening between the periphery of the slot 26 and the end portion 28 of the locking member 25 is distributed within the core and is sufficiently weakened on its passage through the narrow annular space between the hub portions 16 and 17 and the core, before it reaches the ends of the roll of light-sensitive material, to be incapable of fogging the light-sensitive material.

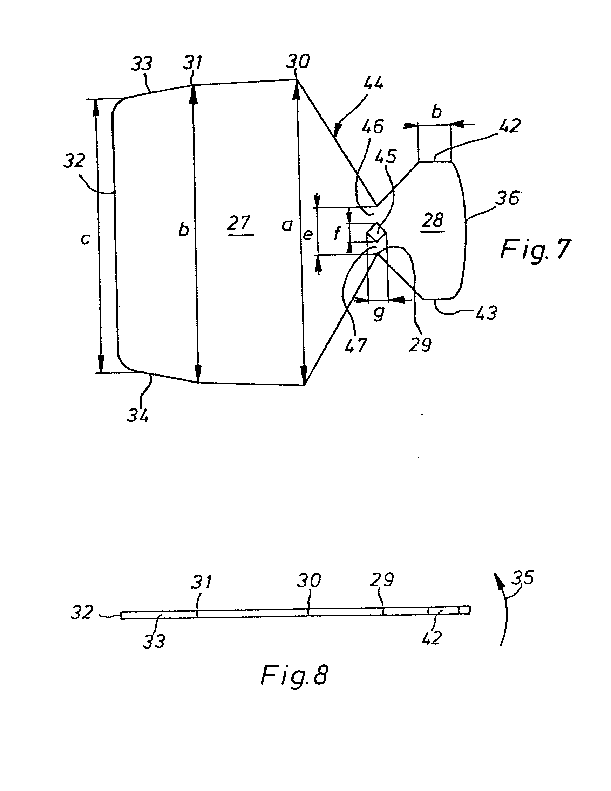

A second embodiment of a locking member is illustrated in figs. 7 and 8. The overall shape of the member 44 corresponds approximately with that of the member 25 illustrated in Figs. 5 and 6, with the end portion 27 being clamped in the core, the end portion 28 being engaged in a slot of an end cap of the cassette, and the zone 29 of reduced width interconnecting said two portions. The locking member of Fig. 7 is, however, provided with an opening 45 in the cross-sectionally reduced zone 29. The effect thereof is as follows. As the web 14 is initially pulled out of the cassette, the core 20 is rotated whereby the end 27 of the locking member 44 is angularly displaced with respect to the end 28. The neck portion 29 is twisted and this causes at a given moment the shearing of the material in those parts of the neck which are most remote from the longitudinal axis of the member, namely in the outer sub-zones 46 and 47. This shearing prognoses towards the axis of the member, but as it does so the greater becomes the tendency of the material to twist instead of to shear. The completion of rupture occurs abruptly and tends to be easily audible. A similar result can be achieved if the locking member is made so that the inner sub-zone 45, instead of being a hole, is an area of material whose resistance to rupture under torque is so small that it does not significantly contribute to the rupture resistance of the locking member.

The shape of the inner sub-zone 45 is preferably such that as to promote rupture with a minimum of twisting motion. This feature is obtained by angles, preferably sharp, at the point of greatest diameter of the opening 45, measured radially with respect to the longitudinally axis of the member. The illustrated diamond-like form of the opening 45 is only one embodiment; other forms being a triangle, a rhombus, etc.

The following data relate to a cassette with a locking member according to the second embodiment:

Core 20:

| | |
|---|---|
| paperboard with a wall thickness of | 2 mm |
| length | 12 inches |

Roll 21:

| | |
|---|---|
| light-sensitive photographic paper, | |
| light-sensitive layer wound at outerside of roll | |
| length of the roll | 200 ft |
| width of the roll | 12 inches |

Locking member 44: shape as illustrated in figs. 7 and 8.
Made by stamping from a sheet of aluminium with a thickness of 1.2 mm.

Dimension a:78 mm

Dimension b:76.6 mm

Dimension c:60 mm

Width e of the neck portion 29:12 mm

Dimension f of the opening 45:5 mm

Dimension g of the opening 45:5 mm.

The normal force for drawing the paper from the cassette varied between 700 g and 400 g. The drawing force for shearing the locking member varied between 2000 and 4000 g.

The shearing of the locking member started after a torsional deformation of the weakened neck portion 29 over approximately 55 degrees.

Upon further rotation of the core, the neck 29 was broken off. The hearing of the locking member occurred smoothly but its completion was quite audible. The final rupturing of the locking member was accompanied by a "click". The length of paper pulled from the cassette amounted to about 50 mm. The portion 28 of the locking member may remain in the slot 26, but usually it will fall out of said slot to rest on the inner wall of the core.

The invention is not limited to the described embodiment. The shell portion of the cassette may have other forms than the rectanguloid one illustrated. For instance, the shell may have a circular cross-section or a combination of a half circular with a half square form.

One end wall may be integrally formed with the shell, so that the cassette comprises one removable end cap only.

The locking member may be made of a material other than aluminium, e.g. a metal alloy, plastic or a fiber-bonded material, and may take a form that differs from the illustrations in figs. 4 to 8. The locking member may be made by moulding rather than by stamping as described.

The non-rotational co-operation of the locking member with a wall portion of the cassette may also occur otherwise than through a tongue and slot engagement. For instance, the wall 19 of the hub member 17 may be provided, on the side facing into the core, with two parallel ribs between which may fit an end portion of the locking member, such as the portion 28 of the member 25. The end edge of such end portion is in such case preferably straight, unlike the rounded edge 36 illustrated in Fig. 5. Suchlike configuration requires, it should be noted, a redesign of the moulds or tools for producing the end cap. The tubelike core, on the contrary, does not require any modification. A redesign for the end caps is not required in the cassette according to the embodiment disclosed hereinbefore, since the slots 26 may be cut in the caps after formation thereof.

**Claims**

1. A cassette for holding and dispensing a roll of web material wound onto a tubelike core, said cassette being in the form of a box comprising a tubular shell and two ends walls having central hub portions, a tubular core carrying a roll of web material wound thereon and rotatably supported by said hub portions, the shell having a peripheral exit slot through which the material can be drawn from a said roll, and a locking member for preventing rotation of the core prior to the first use of the cassette, such member comprising a weakened zone which is between two end portions and which can be ruptured by the action of the initial drawing out of the web material from the cassette, in which one part of said locking member (25) is located in and gripped by the core of the roll, and another part is in engagement with the hub portion of one end wall of said box so as thereby to prevent rotation of the core, characterized in that said locking member (25) has a flat form, and that one end portion (27) of said locking member (25) has two opposite edge portions (33, 34) which have an outwardly convex form thereby to present at two opposed positions (30) local zones for frictional contact with the interior surface of said core (20), the distance ($a$) between said zones exceeding the interior diameter ($d$) of the core to such an extent that the locking member (25) is held against rotational displacement about the axis of the core but can be tilted therein about a transverse axis extending between said positions (30).

2. A cassette according to claim 1, wherein the other end portion (28) of said locking member (25) has a tongue which projects through a slot (26) in one of the end caps.

3. A cassette according to claim 1 or 2, wherein the other end portion (28) of said locking member has two opposite side edge portions (42, 43) that run parallel to each other and parallel to the longitudinal axis of the member, and a curved end edge portion (36).

4. A cassette according to any of claims 1 to 3, wherein the rupture resistance of the locking member (25) varies across the width of said weakened zone (29), (i.e. across its dimension running mormally to the longitudinal axis of such member), there being within such width at least one inner sub-zone (45) where the rupture resistance is neglible relative to the rupture resistance in each of two outer sub-zones (46, 47) between which that inner sub-zone is located.

5. A cassette according to claim 4, wherein in said weakened zone there is at least one hole in the locking member which creates a said inner sub-zone of nil rupture resistance.

6. A cassette according to claim 4 or 5, wherein said weakened zone is a widthwise reduced zone of the locking member.

7. A cassette according to any of claim 4 to 6, wherein there is a said inner sub-zone having three or more boundary edges defining three or more corner angles.

8. A cassette according to any of claims 1 to 7, wherein said one end portion (27) of said locking member (25) tapers towards said weakened zone (29).

9. A cassette according to any of claims 1 to 8, wherein said other end portion (28) of said locking member (25) tapers towards said weakened section.

10. A cassette according to any of claims 1 to 9, wherein said locking member (25) has been cut from sheet metal.

## Patentansprüche

1. Eine Kassete zum Halten und Abliefern einer auf einem zylinderformigen Spulenkern aufgewickelten Materialrolle, die ein dosenartiges Gehäuse mit einer rohrförmigen Schale und zwei Endwände mit zentral positionierten Nabeteilen aufweist, sowie einen zylinderförmigen Kern mit aufgewickelter Materialrolle, der von den Nabeteilen drehend getragen wird, wobei die Schale mit einem Umfangsschlitz versehen ist, durch welchen die Materialbahn vom Kern hindurchgezogen wird und weiter auch ein Verriegelungsglied zum Sperren der Kernumdrehung bevor die Kassette ein erstes Mal angewendet wird, enthält, welches Verriegelungsglied mit einer zwischen zwei Endteilen befindlichen schwächeren Stelle versehen ist, welcher bei der ersten Zugbewegung zum Herausziehen eines ersten Materialbahnstreifens aus der Kassette zerstört wird, wobei zum Sperren der kernumdrehung dieses Verriegelungsglied (25) zum Teil in der Kassette angebracht ist und von Spulenkern ergriffen wird, und zum Teil mit dem Nabeteil einer Endwand des dosenartigen Gehäuses in Angriffsbeziehung steht, dadurch gekennzeichnet dass das Verriegelungsglied (25) flach ausgebildet ist und dass ein Endstück (27) dieses Verriegelungsgliedes (25) zwei einander gegenüberliegende Randteile (33, 34) hat, die je eine nach aussen gerichtete Konvexform bistimmen und zwar derart, dass sie an zwei gegenüberliegenden Stellen (30) örtliche Zonen zum Ausüben eines Reibungskontaktes mit der inneren Fläche des Spulenkernes (20) zeigen, wobei die Entfernung (a) zwischen diesen Zonen den Innendurchmesser (d) des Spulenkernes in solcher Masse überschreitet, dass das Verriegelungsglied (25) gegen Ausführung einer Umdrehungsbewegung um die Kernachse zurückgehalten wird, aber im Kerninneren um eine sich zwischen diesen einander gegenüberstehenden Stellen (30) befindliche Querachse darin gekippt werden kann.

2. Kassette gemäss Anspruch 1, dadurch gekennzeichnet dass das andere Endstück (28) des Verriegelungsgliedes (25) eine sich in dem Schlitz (26) in einer Enddeckelwand hinausragende Zunge aufweist.

3. Kassette gemäss Anspruch 1 oder 2 dadurch gekennzeichnet dass das andere Endstück (28) des Verriegelungsgliedes zwei einander gegenüberliegende seitliche Randteile (42, 43), die miteinander und mit der Längsachse dieses Verriegelungsgliedes parallel sind, und ein gebogenes Endrandteil (36) aufweist.

4. Kassette gemäss einem der vorandgehenden Ansprüche 1 bis 3, dadurch gekennzeichnet dass die Bruchfestigkeit des Verriegelungsgliedes (25) sich quer über die Breite der schwächeren Stelle (29), d.h. quer über deren senkrecht auf der längsachse dieses Verriegelungsgliedes stehende Aumessung ändert, wobei wenigstens eine innere Unterzone (45) innerhalb dieser Breit vorliegt, an der die Bruchfestigkeit in bezug auf die Bruchfestigkeit jeder der zwei diese innere Unterzone (45) abgrenzenden ausseren Unterzonen (46, 47) vernachlässigbar ist.

5. Kassette gemäss Anspruch 4 oder 5, dadurch gekennzeichnet dass in der schwächeren Stelle des Verriegelungsgliedes wenigstens ein Loch ausgeformt ist, welches die besagte innere Unterzone mit Nullbruchfestigkeit bestimmt.

6. Kassette gemäss Anspruch 4 oder 5, dadurch gekennzeichnet dass die schwächere Stelle der Breite des Verriegelungsgliedes nach im letzteren angebracht ist.

7. Kassette gemäss einem der Ansprüche 4 bis 6, dadurch gekennzeichnet dass sie eine solche innere Unterzone mit wenigstens drei Begrenzungsrändern, welche wenigstens drei scharfe Winkelteile bestimmen, aufweist.

8. Kassette gemäss einem der Ansprüche 1 bis 7, dadurch gekennzeichnet dass ein Endstück (27) des Verriegelungsgliedes (25) sich in Richtung der schwächeren Stelle (29) verjüngt.

9. Kassette nach einem der Ansprüche 1 bis 8, dadurch gekennzeichnet dass das andere Endstück (28) das Verriegelungsgliedes (25) sich in Richtung der schwächeren Stelle verjüngt.

10. Kassette gemäss einem der Anspruch 1 bis 9, dadurch gekennzeichnet dass das Verriegelungsglied (25) von einem Metallblech abgetrennt ist.

**Revendications**

1. Cassette pour renfermer et distribuer un rouleau de matériau en bande enroulé sur un noyau tubulaire, dans laquelle la cassette est sous la forme d'une boîte comprenant une enveloppe tubulaire et deux parois terminales possédant des portions centrales constituant des moyeux, un noyau tubulaire porte un rouleau de matériau en bande enroulé sur lui et est supporté par les moyeux en pouvant tourner, l'enveloppe présente une fente périphérique de sortie à travers laquelle on peut tirer sur la bande du rouleau, une pièce de blocage empêche la rotation du noyau avant la première utilisation de la cassette, cette pièce comprend une zone affaiblie située entre deux portions terminales et qui peut être rompue quand l'utilisateur tire initialement sur le matériau en bande pour le bande sortir de la cassette, une partie de la piéce de blocage (25) est située dans le noyau du rouleau et est serrée par celui-ci, et une autre partie coopère avec la portion constituant un moyeu d'une paroi terminale de la boîte, de manière à empêcher la rotation du noyau, cette cassette présentant les caractéristiques suivants: la pièce de blocage (25) a une forme plate, une (27) des portions terminales de la pièce de blocage (25) a deux bords latéraux opposés (33, 34) qui ont une forme extérieure convexe, de manière à présenter à deux positions (30) opposées des zones locales pour un contact de frottement avec la surface intérieure du noyau (20) et la distance (*a*) entre ces zones dépasse le diamètre intérieur (d) du noyau dans une mesure telle que la pièce de blocage (25) ne peut pas subir un déplacement de rotation autour de l'axe du noyau mais qu'elle peut s'incliner dans le noyau autour d'un axe transversal s'étendant entre ces positions (30).

2. Cassette suivant la revendication 1, dans laquelle l'autre portion terminale (28) de la pièce de blocage (25) possède une languette qui se projette à travers une fente (26) de l'un des chapeaux terminaux.

3. Cassette suivant l'une des revendications 1 et 2, dans laquelle ladite autre portion terminale (28) de la pièce de blocage possède deux portions opposées latérales de bordure (42, 43) qui sont parallèles entre elles et parallèles à l'axe longitudinal de la pièce et un portion incurvée (36) de bord d'extrémité.

4. Cassette suivant l'une quelconque des revendications 1 à 3, dans laquelle la résistance à la rupture de la pièce de blocage (25) varie tranversalement à la largeur de la zone affaiblie (29) (c'est-à-dire sur sa dimension qui est transversale à l'axe longitudinal de la pièce), avec présence, à l'intérieur de cette largeur, d'au moins une sous-zone intérieure (45) dans laquelle la résistance à la rupture est néglibeable par rapport à la résistance à la rupture dans chacune des deux sous-zones extérieures (46, 47) entre lesquelles se trouve la zone intérieure.

5. Cassette suivant la revendication 5, dans laquelle, dans la zone affaiblie, il y a au moins un trou de la pièce de blocage qui crée une sous-zone de résistance à la rupture nulle.

6. Cassette suivant l'une des revendications 4 et 5, dans laquelle la zone affaible est une zone de largeur réduite de la pièce de blocage.

7. Cassette suivant l'une quelconque des revendications 4 à 6, dans laquelle une sous-zone intérieure possède au moins trois bords frontière définissant au moins trois angles de coin.

8. Cassette suivant l'une quelconque des revendications 1 à 7 dans laquelle ladite une (27) des portions terminales de la pièce de blocage (25) va· en se rétrécissant en direction de la zone affaiblie (29).

9. Cassette suivant l'une quelconque des revendications 1 à 8, dans laquelle l'autre portion terminale (28) de la pièce de blocage (25) va en se rétrécissant en direction de la zone affaiblie.

10. Cassette suivant l'une quelconque des revendications 1 à 9, dans laquelle la pièce de blocage a été découpée dans une feuille métallique.

Fig.1

Fig.2

Fig. 3

Fig. 4

Fig. 5

Fig. 6

Fig. 7

Fig. 8